# EUROPEAN PATENT SPECIFICATION

(11) **EP 4 097 567 B1**
(45) Date of publication and mention of the grant of the patent: **16.07.2025**
(21) Application number: 20828906.6
(22) Date of filing: 29.11.2020
(51) Int. Cl.: G06F 3/01

(54) **VIRTUAL PATH GENERATION IN A VIRTUAL ENVIRONMENT THAT IS BASED ON A PHYSICAL ENVIRONMENT**
VIRTUELLE PFADGENERIERUNG IN EINER VIRTUELLEN UMGEBUNG, DIE AUF EINER PHYSIKALISCHEN UMGEBUNG BASIERT
GÉNÉRATION DE CHEMIN VIRTUEL DANS UN ENVIRONNEMENT VIRTUEL BASÉ SUR UN ENVIRONNEMENT PHYSIQUE

(30) Priority: 28.01.2020 US 202016774754
(43) Date of publication of application: 07.12.2022
(73) Proprietor: META PLATFORMS TECHNOLOGIES, LLC, Menlo Park, CA 94025 (US)
(72) Inventor: NORIS, Gioacchino, Menlo Park, California 94025 (US); ALDERMAN, Matthew James, Menlo Park, California 94025 (US); MARRA, Alessia, Menlo Park, California 94025 (US)
(74) Representative: Murgitroyd & Company
(86) International application number: PCT/US2020/062533
(87) International publication number: WO 2021/154379

(56) References cited:
- US-A1- 2017 103 574
- US-A1- 2018 060 333
- US-A1- 2018 129 276
- US-A1- 2020 020 162

## Description

### TECHNICAL FIELD

This disclosure generally relates to generation virtual paths in a virtual environment that is based on a physical environment.

### BACKGROUND

Traditional virtual reality (VR) computing systems are designed to be used within a confined space. Due to the limited physical space for walking within the confined space, content designers (e.g., game designers) may not use the user's physical relocation as the mechanism for navigating a virtual environment. While it is possible to simulate walking in a virtual reality environment by the press of a button, doing so would likely cause motion sickness due to the contradiction between the visually perceived movement and the vestibular system's sense of bodily movement. Due to these limitations, traditional VR content designers make "teleportation" the mechanism for navigating a virtual environment. For example, the user may point at a location in a virtual environment, press a button, and teleport instantaneously to that location without being shown the transitional movement. While the teleportation mechanism provides a viable solution to the problem of VR navigation, it does not provide a realistic, immersive experience (e.g., as the journey to each destination is skipped).

US 2018/129276 A1 describes techniques for employing augmented reality or virtual reality information. An information management component (IMC) of an augmented reality device (ARD) can monitor and detect user activities and conditions in area in proximity to ARD. Based on user activities and conditions, IMC can determine augmented reality information that can enhance user experience, performance of user activities, or security and safety of user.

US 2018/060333 A1 describes a system and method for orienting the presentation of a virtual environment with respect to multiple users in a shared virtual space. The system detects physical constraints associated with a user's physical space, and determines a longest, unobstructed physical path in the physical space based on an orientation of the user in the physical space and the associated physical constraints. When a physical obstruction is detected in front of the user within a given threshold, the system causes the user to turn (or in some manner, physical re-orient) before proceeding forward. This may re-direct the user along a longer physical path. In some implementations, the system causes the user to turn, or re-orient, to a desired orientation based on how the virtual features in the virtual environment are presented to the user. For example, the system may position virtual features of the virtual environment with which the user is to engage behind the user, thereby causing the user to naturally turn around to engage the virtual features.

US 2017/103574 A1 describes a system and method of operating an audio visual system generating an immersive virtual experience that may detect when a user approaches a physical boundary of a real world space, and may generate an alert indicating the proximity of the physical boundary.

US 2020/020162 A1 describes a computer system provides directional guidance to a user wearing a head-mounted display (HMD). This is accomplished by obtaining a path through real-world space and presenting multiple virtual path indicators to the user on the head-mounted display. The virtual path indicators are overlaid on a view of a portion of the real-world space and direct the user to follow the path through real-world space.

### SUMMARY OF PARTICULAR EMBODIMENTS

This application discusses a solution to the virtual reality (VR) navigation problem by enabling VR content developers to procedurally generate navigation paths based on the physical room layout available to the user. In addition, a new user interface is inserted into certain junctions within the procedurally-generated path to cause the user to physically turn in the real world to avail the user with walking space, despite the limitations of the physical room layout. At such a junction, the user may be asked to perform a turning motion in order to continue. The degree of turn required by the turning motion would depend on the physical layout of the user's space. To address the potential mismatch between the degree of turn made by the user and the direction of travel down the procedurally-generated path in VR, the VR content may quickly rotate the VR environment so that the user would be facing the intended travel direction in the virtual environment. For example, when the user reaches the end of a physical corridor, the VR content may position a UI device that needs to be rotated in order for the user to continue. If the physical corridor is a dead end, the user may have to turn the UI device 180 degree about the user's axis in order to unlock the path. In the real world, after doing so, the user would be facing the direction from which he came. Visually in VR, the user will see the scene rotate quickly so that he would be facing the intended direction of travel.

According to a first aspect of the present invention, there is provided a computer-implemented method as set out in claim 1.

Notifying the user that the physical rotation of the user is needed for the user to travel beyond the point in the particular virtual path may further include displaying a graphical user interface (GUI) element within the particular virtual path that indicates that the physical rotation of the user is needed.

Notifying the user that the physical rotation of the user is needed for the user to travel beyond the point in the particular virtual path may further include providing an audio notification that indicates that the physical rotation of the user is needed.

Rotating the virtual scene may include rotating the virtual scene approximately 90 degrees.

The virtual scene may be rotated in the directionef opposite to the rotation of the virtual scene that correlates with the physical rotation of the user for approximately 0.3 seconds. Other suitable times are envisaged.

In an implementation not covered by the present invention, the computer-implemented method may further comprise: during detection of the physical rotation of the user, updating a graphical user interface (GUI) that displays the virtual environment such that movement of the GUI is frozen.

Determining that the forward direction of travel of the user is proximate to the boundary condition of a particular physical segment of the physical segments may further include determining that the user is within a threshold distance of a physical constraint of the particular physical segment.

Generating the virtual paths may include generating the particular virtual path based on a first and a second physical segment of the physical segments, where the first and the second physical segments share a common point.

According to a second aspect of the present invention, there is provided a computer-implemented method as set out in claim 6.

Rotating the virtual scene may include rotating the virtual scene approximately 180 degrees.

The different virtual path may be opposite the particular virtual path.

According to a third aspect of the present invention, there is provided a system as set out in claim 8.

Notifying the user that the physical rotation of the user is needed for the user to travel beyond the point in the particular virtual path may further include displaying a graphical user interface (GUI) element within the particular virtual path that indicates that the physical rotation of the user is needed.

Notifying the user that the physical rotation of the user is needed for the user to travel beyond the point in the particular virtual path may further include providing an audio notification that indicates that the physical rotation of the user is needed.

The examples disclosed herein do not limit the scope of this disclosure. The scope of the present invention is defined in the attached claims directed to methods and a system.

### BRIEF DESCRIPTION OF THE DRAWINGS

FIG. 1 illustrates an example environment for generation of virtual paths in a virtual environment based on a physical environment.
FIG. 2 illustrates an example physical environment.
FIG. 3A, 3B, 3C illustrate example virtual paths.
FIG. 4 illustrates connected virtual paths of a virtual environment.
FIG. 5 illustrates an example method for generation of virtual paths in a virtual environment based on a physical environment.
FIG. 6 illustrates an example computer system.
FIG. 7 illustrates an example artificial reality system.

### DETAILED DESCRIPTION

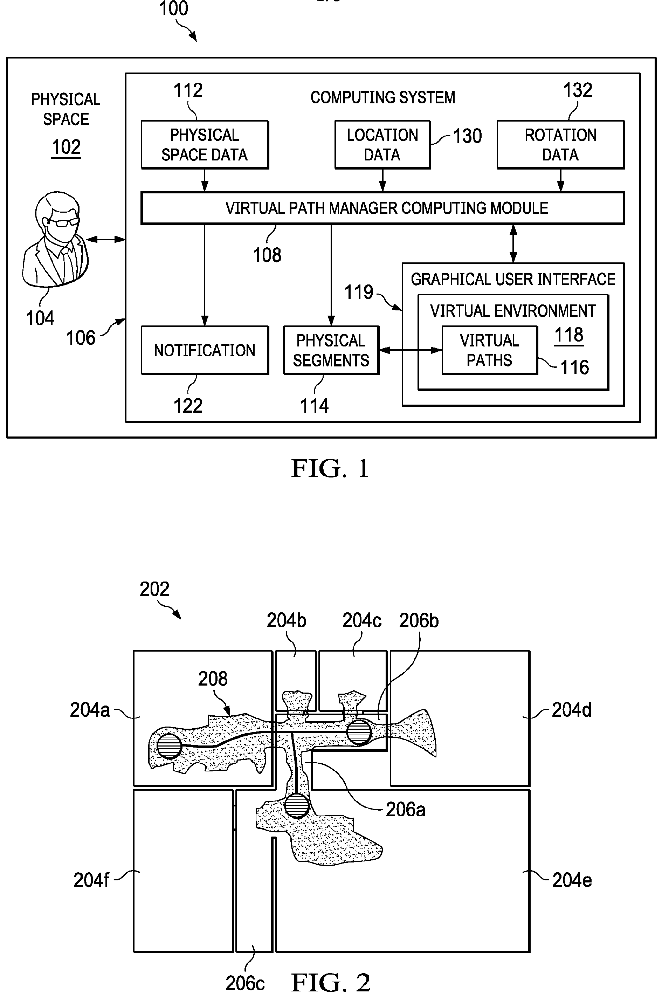

Figure 1 illustrates an environment 100 for generation of virtual paths in a virtual environment based on a physical environment. The environment 100 can include a physical space 102 that can include a user 104 interacting with a computing system 106. In some examples, the computing system 106 can include a virtual reality computing system, an augmented reality computing system, or a mixed-reality computing system. The computing system 106 can include a virtual path computing module 108.

The virtual path manager computing module 108 can receive physical space data 112 identifying a layout of the physical space 102 surrounding the user 104. For example, the computing system 106 can include a wearable computing device (such as a headset wearable computing device). The user 104 can travel (walk) about the physical space 102 such that the computing system 106 can identify/recognize the physical space 102 (e.g., utilizing a camera sensing module) to generate the physical space data 112 (*e.g.,* a topology of the physical space 102).

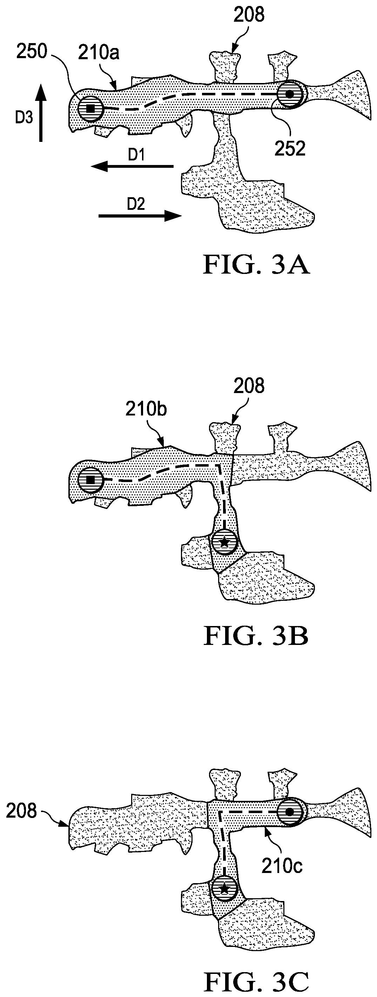

The virtual path manager computing module 108 can segment the layout of the physical space 102 surrounding the user 104 into one or more physical segments 114. Referring to Figure 2, an environment 200 is illustrated. For example, the environment 200 can include a multiple (physical) rooms 204a, 204b, 204c, 204d, 204e, 204f (collectively referred to as rooms 204) and hallways 206a, 206b, 206c (collectively referred to as hallways 206) connecting one or more of the rooms 204. To that end, as the user 104 walks about the environment 200, the virtual path manager computing module 108 can identify the layout of the physical space 208, similar to the physical space 102, included by the environment 200. Referring to Figures 3A, 3B, 3C, the virtual path manger computing module 108 can segment the layout of the physical space 208 into physical segments 210a, 210b, 210c (collectively referred to as physical segments 210). In some examples, a portion of one or more of the segments 210 can overlap with another segment 210 (*e.g.,* the segment 210b overlaps with the segment 210a).

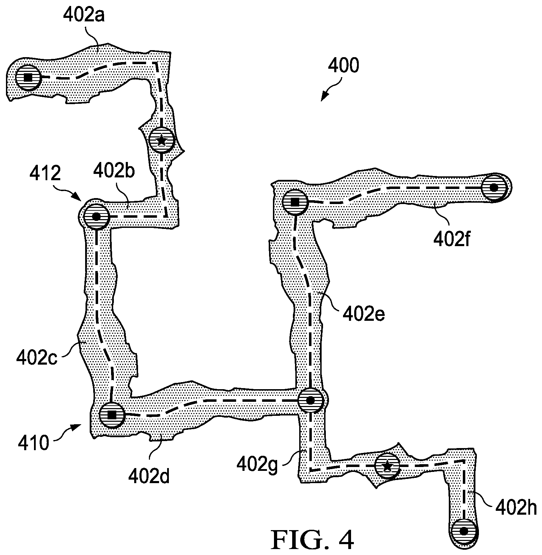

Referring back to Figure 1, the virtual path manager computing module 108 can generate, based on the physical segments 114, virtual paths 116 of a virtual environment 118 through which the user 104 can navigate by traveling the physical segments 114. Specifically, the virtual path manager computing module 108 can generate the virtual environment 118 for display on a graphical user interface (GUI) 119. Referring to Figure 4, virtual paths of a virtual environment 400 is shown. Specifically, based on the physical segments 210 of Figures 3A, 3B, 3C, the virtual path manager computing module 108 can generate the virtual paths 402a, 402b, 402c, 402d, 402e, 402f, 402g, 402h (collectively referred to as virtual paths 402). The virtual paths 402c, 402d, 402e, 402f can be based on the physical segment 210a; the virtual path 402a can be based on the physical segment 210b; and the virtual paths 402b, 402g, and 402h can be based on the physical segment 210c. In some examples, the virtual paths 402 can be based on two of the physical segments 210, with the two physical segments 210 sharing a common point (or intersection).

Referring back to Figure 1, the virtual path manager computing module 108 can display a particular virtual path 116 based on a location of the user 104 in the virtual environment 118. Specifically, the virtual path manager computing module 108 can provide for display on the GUI 119 a particular virtual path 116. For example, the display device computing module 120 can provide for display on the GUI the virtual path 402c. The virtual path manager computing module 108 can determine that a forward direction of travel of the user 104 is proximate to a boundary condition of a particular physical segment 114 that corresponds to the particular virtual path 116, *i.e.,* based on received location data 130. For example, the virtual path manager computing module 108 can determine that a forward direction of travel of the user 104 is proximate to a boundary condition of the physical segment 210a that corresponds to the particular virtual path 402c that user is currently located in. Specifically, the user 104 can be moving toward point 410 in the virtual path 402c that corresponds with moving towards point 250 of the corresponding physical segment 210a, as shown in Figure 3A, based on the location data 130. Point 250 of the physical segment 210a can correspond to a boundary condition of the physical segment 210a, *e.g.,* a wall of the physical space 208.

In some examples, determining that the forward direction of travel of the user 104 is proximate to the boundary condition of the particular physical segment 114 includes the virtual path manager computing module 108 determining that the user 104 is within a threshold distance of physical contact with the particular physical segment 114. For example, the virtual path manager computing module 108 can determine that, when the user is at point 250 of the physical segment 210a that corresponds to the virtual path 402c, the user 104 is within a threshold distance of a physical constraint (e.g., a physical wall) of the physical segment 210a.

The virtual path manager computing module 108, in response to determining that the forward direction of travel of the user 104 is proximate to the boundary condition of the particular physical segment 114, notifies the user 104 that a physical rotation of the user 104 is needed in order for the user 104 to travel beyond a point in the particular virtual path 116. For example, as the user 104 physically approaches point 250 within the physical segment 210a along the direction D1, the virtual path manager computing module 108 provides a notification 122 to the user 104 that a physical rotation of the user 104 is needed in order for the user 104 to travel beyond the point 410 in the virtual path 402c.

In some examples, in response to determining that the forward direction of travel of the user 104 is proximate to the boundary condition of the particular physical segment 114, the virtual path manager computing module 108 can provide for display on the GUI 119 a GUI element within the particular virtual path 116 that indicates that the physical rotation is needed. In some examples, in response to determining that that the forward direction of travel of the user 104 is proximate to the boundary condition of the particular physical segment 114, the virtual path manager computing module 108 can provide an audio notification that indicates that the physical rotation is needed. In some examples, the virtual path manager computing module 108 can generate the GUI element in response to determining that the forward direction of travel of the user 104 is proximate to the boundary condition of the particular physical segment 114. In some examples, the virtual path manager computing module 108 can generate the GUI element prior to determining that the forward direction of travel of the user 104 is proximate to the boundary condition of the particular physical segment 114. That is, the location within the virtual environment 118 of the GUI elements can be predetermined when initially generating the virtual environment 118.

The virtual path manager computing module 108 can detect that physical rotation of the user 104 is complete. Specifically, the virtual path computing module 108 can receive rotation data 132 indicating a physical rotation status of the user 104. For example, the rotational data 132 can indicate that the user 104 has rotated at point 250 of the physical segment 210a as shown in Figure 3A such that the user 104 is facing towards the point 252 of the physical segment 210a (and away from the boundary condition at point 250) along the direction D2. The virtual path manager computing module 108, in response to detecting that physical rotation of the user 104 is complete, can update the GUI 119 to show the virtual path 402d and allow the user 104 to travel beyond the point 410. That is, the user 104 is allowed to travel beyond the point 410 along the virtual path 402d that corresponds to physical segment 210a and towards point 252 of the physical segment 210a.

In some examples, the virtual path manager computing module 108, in response to detecting that physical rotation of the user 104 is complete, can update the GUI 119 to show the virtual path 402c and allow the user 104 to travel beyond the point 410, e.g., towards point 412. That is, the user 104 is allowed to travel beyond the point 410 and towards point 412 along the virtual path 402c that corresponds to physical segment 210a and towards point 252 of the physical segment 210a.

In some examples, the virtual path manager computing module 108, in response to detecting that physical rotation of the user 104 is complete, can update the GUI 119 to show a different virtual path 116 that is opposite the particular virtual path 116.

In some examples, the notification 122 can indicate to the user 104 to physically rotate 90 degrees. That is, after physical rotation of the user 104, the rotational data 132 can indicate that the user 104 has rotated at point 250 of the physical segment 210a as shown in Figure 3A such that the user 104 is facing along the direction D3. The virtual path computing module 108 can determine that a further physical rotation of the user 104 is needed in order for the user 104 to travel beyond a point in the particular virtual path 116. The virtual path computing module 108 can provide a further notification to the user 104 that a further physical rotation of the user 104 is needed for the user 104 to travel beyond the point 410 in the virtual path. The virtual path manager computing module 108 can detect that further physical rotation of the user 104 is complete. For example, the rotational data 132 can indicate that the user 104 has rotated at point 250 of the physical segment 210a as shown in Figure 3A such that the user 104 is facing towards the point 252 of the physical segment 210a along the direction D2. The virtual path manager computing module 108, in response to detecting that physical rotation of the user 104 is complete, can update the GUI 119 to show the virtual path 402d and allow the user 104 to travel beyond the point 410. That is, the user 104 is allowed to travel beyond the point 410 along virtual path 402d that corresponds to physical segment 210a and towards point 252 of physical segment 210a.

In some examples, the notification 122 can indicate to the user 104 to physically rotate 180 degrees. That is, the virtual path manager computing module 108 can detect that physical rotation of the user 104 is complete such that the rotational data 132 can indicate that the user 104 has rotated at point 250 of the physical segment 210a as shown in Figure 3A such that the user 104 is facing towards the point 252 of the physical segment 210 (and away from the boundary condition at point 250) along the direction D2.

During detection of the physical rotation of the user 104, the virtual path manager computing module 108 updates the GUI 119 to display the virtual environment 118 such that the GUI 119 correlates with the physical rotation of the user 104. Specifically, the virtual path manager computing module 108 updates the GUI 119 such that a virtual scene of the virtual environment 118 is rotated that correlates with the physical rotation of the user 104. That is, the virtual environment 119 rotates correspondingly with the physical rotation of the user 104. For example, the rotation of the virtual scene of the virtual environment 118 can include rotation of the virtual scene by 90 degrees. For example, the rotation of the virtual scene of the virtual environment 118 can include rotation of the virtual scene by 180 degrees.

In some examples not covered by the claims, during detection of the physical rotation of the user 104, the virtual path manager computing module 108 updates the GUI 119 such that movement of the virtual environment 118 is frozen.

After the virtual path manager computing module 108 detects that physical rotation of the user 104 is compete, the virtual path manager computing module 108 rotates the virtual environment 118 in a direction opposite to the rotation of the virtual environment 118 that correlates with the physical rotation of the user 104. That is, the virtual environment 118 rotates correspondingly with the physical rotation of the user 104, and after the physical rotation of the user 104 is complete, the virtual environment 118 rotates in a direction opposite to the initial rotation (e.g., rotate backwards). In some examples, the virtual path manager computing module 108, after the physical rotation of the user 104 is complete, rotates the virtual environment 118 in the direction opposite to the initial rotation such that the GUI 119 displays an orientation of the virtual environment 118 about the particular virtual path 116 similar to that prior to rotation of the virtual environment 118. In some examples, the virtual path manager computing module 108, after the physical rotation of the user 104 is complete, rotates the virtual environment 118 in the direction opposite to the initial rotation for approximately 0.3 seconds. In some examples, the virtual path manager computing module 108, after the physical rotation of the user 104 is complete, rotates the virtual environment 118 in the direction opposite to the initial rotation for less than 0.3 seconds.

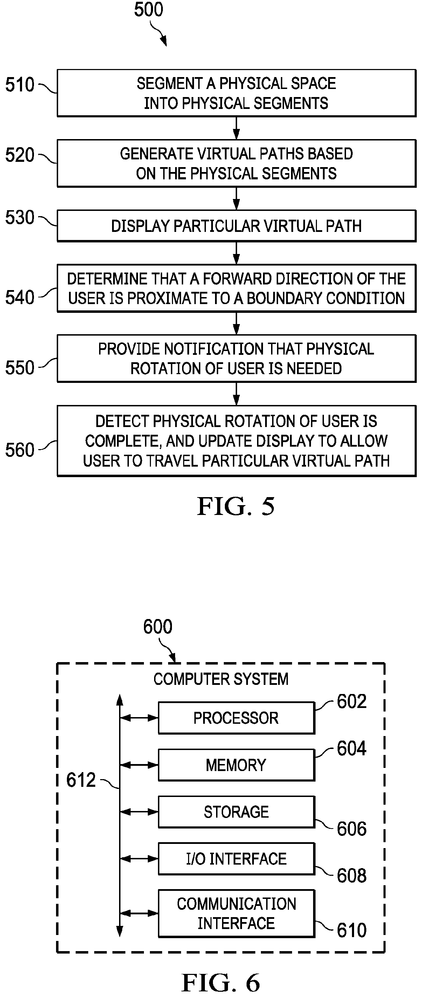

Figure 5 illustrates an example method 500 for generation of virtual paths in a virtual environment based on a physical environment. The method may begin at step 510, wherein the virtual path manager computing module 108 segments a layout of the physical space 102 surrounding the user 104 into physical segments 114. At step 520, the virtual path manager computing module 108 generates, based on the physical segments 114, virtual paths 116 through which the user 104 can navigate by traveling the physical segments 114. At 530, the virtual path manager computing module 108 displays a particular virtual path 116 based on a location of the user 104 in the virtual environment 118. At step 540, the virtual path manager computing module 108 determines that a forward direction of travel of the user 104 is proximate to a boundary condition of a particular physical segment 114 that corresponds to a particular virtual path 116. At 550, the virtual path manager computing module 108, in response to the determining, provides a notification 122 to the user 104 that a physical rotation of the user 104 is needed in order for the user 104 to travel beyond a point in the particular virtual path 116. At step 560, the virtual path manager computing module 108 detects that the physical rotation of the user 104 is complete (via the rotation data 132), and in response, updates the display (e.g., the GUI 119) to show the particular virtual path 116 and allows the user 104 to travel beyond the point in the particular virtual path 116.

Figure 6 illustrates an example computer system 600. In particular examples, one or more computer systems 600 perform one or more steps of one or more methods described or illustrated herein. In particular examples, one or more computer systems 600 provide functionality described or illustrated herein. In particular examples, software running on one or more computer systems 600 performs one or more steps of one or more methods described or illustrated herein or provides functionality described or illustrated herein. Particular examples include one or more portions of one or more computer systems 600. Herein, reference to a computer system may encompass a computing device, and vice versa, where appropriate. Moreover, reference to a computer system may encompass one or more computer systems, where appropriate.

This disclosure contemplates any suitable number of computer systems 600. This disclosure contemplates computer system 600 taking any suitable physical form. As example and not by way of limitation, computer system 600 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, computer system 600 may include one or more computer systems 600; be unitary or distributed; span multiple locations; span multiple machines; span multiple data centers; or reside in a cloud, which may include one or more cloud components in one or more networks. Where appropriate, one or more computer systems 600 may perform without substantial spatial or temporal limitation one or more steps of one or more methods described or illustrated herein. As an example and not by way of limitation, one or more computer systems 600 may perform in real time or in batch mode one or more steps of one or more methods described or illustrated herein. One or more computer systems 600 may perform at different times or at different locations one or more steps of one or more methods described or illustrated herein, where appropriate.

In particular examples, computer system 600 includes a processor 602, memory 604, storage 606, an input/output (I/O) interface 608, a communication interface 610, and a bus 612. Although this disclosure describes and illustrates a particular computer system having a particular number of particular components in a particular arrangement, this disclosure contemplates any suitable computer system having any suitable number of any suitable components in any suitable arrangement.

In particular examples, processor 602 includes hardware for executing instructions, such as those making up a computer program. As an example and not by way of limitation, to execute instructions, processor 602 may retrieve (or fetch) the instructions from an internal register, an internal cache, memory 604, or storage 606; decode and execute them; and then write one or more results to an internal register, an internal cache, memory 604, or storage 606. In particular examples, processor 602 may include one or more internal caches for data, instructions, or addresses. This disclosure contemplates processor 602 including any suitable number of any suitable internal caches, where appropriate. As an example and not by way of limitation, processor 602 may include one or more instruction caches, one or more data caches, and one or more translation lookaside buffers (TLBs). Instructions in the instruction caches may be copies of instructions in memory 604 or storage 606, and the instruction caches may speed up retrieval of those instructions by processor 602. Data in the data caches may be copies of data in memory 604 or storage 606 for instructions executing at processor 602 to operate on; the results of previous instructions executed at processor 602 for access by subsequent instructions executing at processor 602 or for writing to memory 604 or storage 606; or other suitable data. The data caches may speed up read or write operations by processor 602. The TLBs may speed up virtual-address translation for processor 602. In particular examples, processor 602 may include one or more internal registers for data, instructions, or addresses. This disclosure contemplates processor 602 including any suitable number of any suitable internal registers, where appropriate. Where appropriate, processor 602 may include one or more arithmetic logic units (ALUs); be a multi-core processor; or include one or more processors 602. Although this disclosure describes and illustrates a particular processor, this disclosure contemplates any suitable processor.

In particular examples, memory 604 includes main memory for storing instructions for processor 602 to execute or data for processor 602 to operate on. As an example and not by way of limitation, computer system 600 may load instructions from storage 606 or another source (such as, for example, another computer system 600) to memory 604. Processor 602 may then load the instructions from memory 604 to an internal register or internal cache. To execute the instructions, processor 602 may retrieve the instructions from the internal register or internal cache and decode them. During or after execution of the instructions, processor 602 may write one or more results (which may be intermediate or final results) to the internal register or internal cache. Processor 602 may then write one or more of those results to memory 604. In particular examples, processor 602 executes only instructions in one or more internal registers or internal caches or in memory 604 (as opposed to storage 606 or elsewhere) and operates only on data in one or more internal registers or internal caches or in memory 604 (as opposed to storage 606 or elsewhere). One or more memory buses (which may each include an address bus and a data bus) may couple processor 602 to memory 604. Bus 612 may include one or more memory buses, as described below. In particular examples, one or more memory management units (MMUs) reside between processor 602 and memory 604 and facilitate accesses to memory 604 requested by processor 602. In particular examples, memory 604 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 604 may include one or more memories 604, where appropriate. Although this disclosure describes and illustrates particular memory, this disclosure contemplates any suitable memory.

In particular examples, storage 606 includes mass storage for data or instructions. As an example and not by way of limitation, storage 606 may include a hard disk drive (HDD), a floppy disk drive, flash memory, an optical disc, a magneto-optical disc, magnetic tape, or a Universal Serial Bus (USB) drive or a combination of two or more of these. Storage 606 may include removable or non-removable (or fixed) media, where appropriate. Storage 606 may be internal or external to computer system 600, where appropriate. In particular examples, storage 606 is non-volatile, solid-state memory. In particular examples, storage 606 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 606 taking any suitable physical form. Storage 606 may include one or more storage control units facilitating communication between processor 602 and storage 606, where appropriate. Where appropriate, storage 606 may include one or more storages 606. Although this disclosure describes and illustrates particular storage, this disclosure contemplates any suitable storage.

In particular examples, I/O interface 608 includes hardware, software, or both, providing one or more interfaces for communication between computer system 600 and one or more I/O devices. Computer system 600 may include one or more of these I/O devices, where appropriate. One or more of these I/O devices may enable communication between a person and computer system 600. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 608 for them. Where appropriate, I/O interface 608 may include one or more device or software drivers enabling processor 602 to drive one or more of these I/O devices. I/O interface 608 may include one or more I/O interfaces 608, where appropriate. Although this disclosure describes and illustrates a particular I/O interface, this disclosure contemplates any suitable I/O interface.

In particular examples, communication interface 610 includes hardware, software, or both providing one or more interfaces for communication (such as, for example, packet-based communication) between computer system 600 and one or more other computer systems 600 or one or more networks. As an example and not by way of limitation, communication interface 610 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 610 for it. As an example and not by way of limitation, computer system 600 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 600 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 600 may include any suitable communication interface 610 for any of these networks, where appropriate. Communication interface 610 may include one or more communication interfaces 610, where appropriate. Although this disclosure describes and illustrates a particular communication interface, this disclosure contemplates any suitable communication interface.

In particular examples, bus 612 includes hardware, software, or both coupling components of computer system 600 to each other. As an example and not by way of limitation, bus 612 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 612 may include one or more buses 612, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

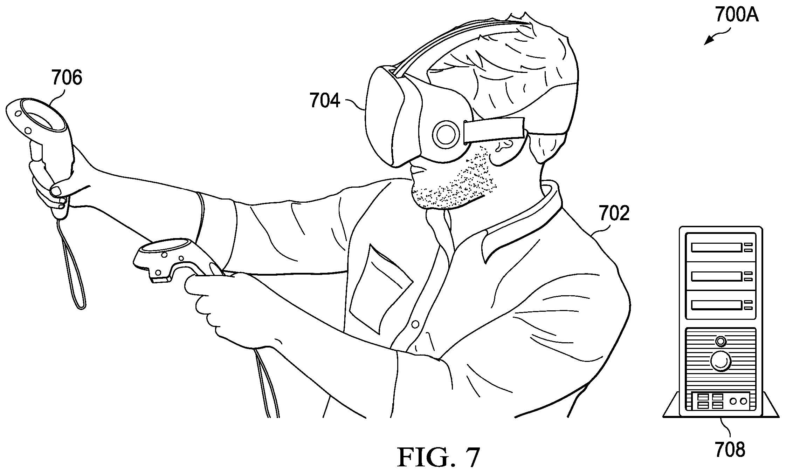

Figure 7 illustrates an example artificial reality system 700A. In particular examples, the artificial reality system 700A may comprise a headset 704, a controller 706, and a computing system 708, etc. A user 702 may wear the headset 704 that could display visual artificial reality content to the user 702. The headset 704 may include an audio device that could provide audio artificial reality content to the user 702. The headset 704 may include one or more cameras which can capture images and videos of environments. The headset 704 may include an eye tracking system to determine the vergence distance of the user 702. The headset 704 may be referred as a head-mounted display (HDM). The controller 706 may comprise a trackpad and one or more buttons. The controller 706 may receive inputs from the user 702 and relay the inputs to the computing system 708. The controller 706 may also provide haptic feedback to the user 702. The computing system 708 may be connected to the headset 704 and the controller 706 through cables or wireless connections. The computing system 708 may control the headset 704 and the controller 706 to provide the artificial reality content to and receive inputs from the user 702. The computing system 708 may be a standalone host computer system, an on-board computer system integrated with the headset 704, a mobile device, or any other hardware platform capable of providing artificial reality content to and receiving inputs from the user 702.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

## Claims

1. A computer-implemented method (500), comprising:
segmenting (510) a layout of a physical space (102) surrounding a user (104, 702) into physical segments (114, 210);
generating (520), based on the physical segments (114, 210), virtual paths (116, 402) for a virtual environment (118) through which the user (104, 702) can navigate by traveling the physical segments (114, 210);
displaying (530) a particular virtual path of the virtual paths (116, 402) based on a location of the user (104, 702) in the virtual environment (118);
determining (540) that the user in a forward direction of travel of the user (104, 702) is proximate to a boundary condition of a particular physical segment of the physical segments (114, 210), the particular physical segment corresponding to the particular virtual path (116, 402);
in response to the determining, determining an amount of physical rotation by the user (104, 702) that is needed in order for the user to travel beyond a point in the particular virtual path (116, 402), and providing (550) a notification to the user indicating the amount of physical rotation by the user;
during detection of the physical rotation by the user, updating a virtual scene of the virtual environment by rotating the virtual scene such that the rotation of the virtual scene correlates with the physical rotation of the user; and
detecting (560) that the physical rotation of the user (104, 702) is complete when rotational data (132) indicates that the user has rotated by the indicated amount of physical rotation,
and in response, updating (560) the virtual scene by rotating the virtual scene in a direction opposite to the rotation that correlates with the physical rotation of the user to show the particular virtual path (116, 402) and allowing the user to travel beyond the point in the particular virtual path (116, 402).

2. The computer-implemented method of claim 1, wherein providing a notification to the user indicating the amount of physical rotation by the user further includes displaying a graphical user interface, GUI, element within the particular virtual path that indicates that the physical rotation of the user is needed;
preferably wherein providing a notification to the user indicating the amount of physical rotation by the user further includes providing an audio notification that indicates that the physical rotation of the user is needed.

3. The computer-implemented method of claim 1, wherein the virtual scene is rotated in the direction opposite to the rotation of the virtual scene that correlates with the physical rotation of the user for approximately 0.3 seconds.

4. The computer-implemented method of any preceding claim, wherein determining that the user in the forward direction of travel of the user (104, 702) is proximate to the boundary condition of a particular physical segment of the physical segments (114, 210) further includes determining that the user is within a threshold distance of a physical constraint of the particular physical segment.

5. The computer-implemented method of any preceding claim, wherein generating the virtual paths (116, 402) includes generating the particular virtual path based on a first and a second physical segment of the physical segments (114, 210), where the first and the second physical segments share a common point.

6. A computer-implemented method, comprising:
segmenting a layout of a physical space (102) surrounding a user (104, 702) into physical segments (114, 210);
generating, based on the physical segments, virtual paths (116, 402) for a virtual environment (118) through which the user (104, 702) can navigate by traveling the physical segments (114, 210);
displaying a particular virtual path of the virtual paths (116, 402) based on a location of the user (104, 702) in the virtual environment (118);
determining that the user in a forward direction of travel of the user (104, 702) is proximate to a boundary condition of a particular physical segment of the physical segments (114, 210), the particular physical segment corresponding to the particular virtual path (116, 402);
in response to the determining, determining an amount of physical rotation by the user (104, 702) that is needed in order for the user to travel beyond a point in the particular virtual path, and providing a notification to the user indicating the amount of physical rotation by the user;
during detection of the physical rotation by the user, updating a virtual scene of the virtual environment by rotating the virtual scene such that the rotation of the virtual scene correlates with the physical rotation of the user; and
detecting that the physical rotation of the user (104, 702) is complete when rotational data (132) indicates that the user has rotated by the indicated amount of physical rotation, and in response, updating the virtual scene by rotating the virtual scene in a direction opposite to the rotation that correlates with the physical rotation of the user to show a different virtual path (116, 402) and allowing the user to travel along the different virtual path.

7. The computer-implemented method of claim 6, wherein the different virtual path is opposite the particular virtual path.

8. A system (106, 600, 708) comprising a processor (602) having access to memory media storing instructions which, when executed by the processor, cause the processor to carry out the steps:
segmenting a layout of a physical space (102) surrounding a user (104, 702) into physical segments (114, 210);
generating, based on the physical segments, virtual paths (116, 402) for a virtual environment (118) through which the user (104, 702) can navigate by traveling the physical segments (114, 210);
displaying a particular virtual path of the virtual paths (116, 402) based on a location of the user in the virtual environment (118);
determining that the user in a forward direction of travel of the user (104, 702) is proximate to a boundary condition of a particular physical segment of the physical segments (114, 210), the particular physical segment corresponding to the particular virtual path (116, 402);
in response to the determining, determining an amount of physical rotation by the user (104, 702) that is needed in order for the user to travel beyond a point in the particular virtual path, and providing a notification to the user indicating the amount of physical rotation by the user;
during detection of the physical rotation by the user, updating a virtual scene of the virtual environment by rotating the virtual scene such that the rotation of the virtual scene correlates with the physical rotation of the user; and
detecting that the physical rotation of the user (104, 702) is complete when rotational data (132) indicates that the user has rotated by the indicated amount of physical rotation, and in response, updating the virtual scene by rotating the virtual scene in a direction opposite to the rotation that correlates with the physical rotation of the user to show the particular virtual path and allowing the user to travel beyond the point in the particular virtual path (116, 402).

9. The system (106, 600, 708) of claim 8, wherein providing a notification to the user indicating the amount of physical rotation by the user further includes displaying a graphical user interface, GUI, element within the particular virtual path that indicates that the physical rotation of the user is needed;
preferably wherein providing a notification to the user indicating the amount of physical rotation by the user further includes providing an audio notification that indicates that the physical rotation of the user is needed.

## Patentansprüche

1. Ein rechnerimplementiertes Verfahren (500), das Folgendes beinhaltet:
Segmentieren (510) einer Auslegung eines physischen Raums (102), der einen Benutzer (104, 702) umgibt, in physische Segmente (114, 210);
Generieren (520), basierend auf den physischen Segmenten (114, 210), virtueller Pfade (116, 402) für eine virtuelle Umgebung (118), durch die der Benutzer (104, 702) durch Fortbewegen über die physischen Segmente (114, 210) navigieren kann;
Anzeigen (530) eines konkreten virtuellen Pfads der virtuellen Pfade (116, 402) basierend auf einem Standort des Benutzers (104, 702) in der virtuellen Umgebung (118); Bestimmen (540), dass sich der Benutzer in einer Vorwärtsrichtung der Fortbewegung des Benutzers (104, 702) nahe einer Randbedingung eines konkreten physischen Segments der physischen Segmente (114, 210) befindet, wobei das konkrete physische Segment dem konkreten virtuellen Pfad (116, 402) entspricht;
als Reaktion auf das Bestimmen, Bestimmen eines Betrags der physischen Rotation durch den Benutzer (104, 702), die für den Benutzer notwendig ist, um sich über einen Punkt in dem konkreten virtuellen Pfad (116, 402) hinaus fortzubewegen, und Bereitstellen (550) einer Benachrichtigung an den Benutzer, die den Betrag der physischen Rotation durch den Benutzer angibt;
während der Detektion der physischen Rotation durch den Benutzer, Aktualisieren einer virtuellen Szene der virtuellen Umgebung durch Rotieren der virtuellen Szene, sodass die Rotation der virtuellen Szene mit der physischen Rotation des Benutzers korreliert; und
Detektieren (560), dass die physische Rotation des Benutzers (104, 702) abgeschlossen ist, wenn Rotationsdaten (132) angeben, dass der Benutzer um den angegebenen Betrag der physischen Rotation rotiert hat,
und als Reaktion, Aktualisieren (560) der virtuellen Szene durch Rotieren der virtuellen Szene in einer zu der Rotation entgegengesetzten Richtung, die mit der physischen Rotation des Benutzers korreliert, um den konkreten virtuellen Pfad (116, 402) zu zeigen, und Erlauben, dass sich der Benutzer über den Punkt in dem konkreten virtuellen Pfad (116, 402) hinaus fortbewegt.

2. Rechnerimplementiertes Verfahren gemäß Anspruch 1, wobei das Bereitstellen einer Benachrichtigung für den Benutzer, die den Betrag der physischen Rotation durch den Benutzer angibt, ferner das Anzeigen eines grafischen Benutzerschnittstellenelements, GUI-Elements, innerhalb des konkreten virtuellen Pfads umfasst, das angibt, dass die physische Rotation des Benutzers benötigt wird;
wobei bevorzugt das Bereitstellen einer Benachrichtigung für den Benutzer, die den Betrag der physischen Rotation durch den Benutzer angibt, ferner das Bereitstellen einer Audiobenachrichtigung umfasst, die angibt, dass die physische Rotation des Benutzers benötigt wird.

3. Rechnerimplementiertes Verfahren gemäß Anspruch 1, wobei die virtuelle Szene in der zu der Rotation entgegengesetzten Richtung rotiert wird, die mit der physischen Rotation des Benutzers für ungefähr 0,3 Sekunden korreliert.

4. Rechnerimplementiertes Verfahren nach einem vorhergehenden Anspruch, wobei das Bestimmen, dass sich der Benutzer in der Vorwärtsrichtung der Fortbewegung des Benutzers (104, 702) nahe der Randbedingung eines konkreten physischen Segments der physischen Segmente (114, 210) befindet, ferner das Bestimmen, dass sich der Benutzer innerhalb einer Schwellendistanz einer physischen Einschränkung des konkreten physischen Segments befindet, umfasst.

5. Rechnerimplementiertes Verfahren nach einem vorhergehenden Anspruch, wobei das Generieren der virtuellen Pfade (116, 402) das Generieren des konkreten virtuellen Pfads basierend auf einem ersten und einem zweiten physischen Segment der physischen Segmente (114, 210) umfasst, wobei sich das erste und das zweite physische Segment einen gemeinsamen Punkt teilen.

6. Ein rechnerimplementiertes Verfahren, das Folgendes beinhaltet:
Segmentieren einer Auslegung eines physischen Raums (102), der einen Benutzer (104, 702) umgibt, in physische Segmente (114, 210);
Generieren, basierend auf den physischen Segmenten, virtueller Pfade (116, 402) für eine virtuelle Umgebung (118), durch die der Benutzer (104, 702) durch Fortbewegen über die physischen Segmente (114, 210) navigieren kann;
Anzeigen eines konkreten virtuellen Pfads der virtuellen Pfade (116, 402) basierend auf einem Standort des Benutzers (104, 702) in der virtuellen Umgebung (118);
Bestimmen, dass sich der Benutzer in einer Vorwärtsrichtung der Fortbewegung des Benutzers (104, 702) nahe einer Randbedingung eines konkreten physischen Segments der physischen Segmente (114, 210) befindet, wobei das konkrete physische Segment dem konkreten virtuellen Pfad (116, 402) entspricht;
als Reaktion auf das Bestimmen, Bestimmen eines Betrags der physischen Rotation durch den Benutzer (104, 702), die für den Benutzer notwendig ist, um sich über einen Punkt in dem konkreten virtuellen Pfad hinaus fortzubewegen, und Bereitstellen einer Benachrichtigung an den Benutzer, die den Betrag der physischen Rotation durch den Benutzer angibt;
während der Detektion der physischen Rotation durch den Benutzer, Aktualisieren einer virtuellen Szene der virtuellen Umgebung durch Rotieren der virtuellen Szene, sodass die Rotation der virtuellen Szene mit der physischen Rotation des Benutzers korreliert; und
Detektieren, dass die physische Rotation des Benutzers (104, 702) abgeschlossen ist, wenn Rotationsdaten (132) angeben, dass der Benutzer um den angegebenen Betrag der physischen Rotation rotiert hat, und als Reaktion, Aktualisieren der virtuellen Szene durch Rotieren der virtuellen Szene in einer zu der Rotation entgegengesetzten Richtung, die mit der physischen Rotation des Benutzers korreliert, um einen unterschiedlichen virtuellen Pfad (116, 402) zu zeigen, und Erlauben, dass sich der Benutzer entlang des unterschiedlichen virtuellen Pfads fortbewegt.

7. Rechnerimplementiertes Verfahren gemäß Anspruch 6, wobei der unterschiedliche virtuelle Pfad dem konkreten virtuellen Pfad entgegengesetzt ist.

8. Ein System (106, 600, 708), das einen Prozessor (602) beinhaltet, der Zugriff auf Speichermedien hat, die Anweisungen speichern, die, wenn sie von dem Prozessor ausgeführt werden, den Prozessor veranlassen, die folgenden Schritte vorzunehmen:
Segmentieren einer Auslegung eines physischen Raums (102), der einen Benutzer (104, 702) umgibt, in physische Segmente (114, 210);
Generieren, basierend auf den physischen Segmenten, virtueller Pfade (116, 402) für eine virtuelle Umgebung (118), durch die der Benutzer (104, 702) durch Fortbewegen über die physischen Segmente (114, 210) navigieren kann;
Anzeigen eines konkreten virtuellen Pfads der virtuellen Pfade (116, 402) basierend auf einem Standort des Benutzers in der virtuellen Umgebung (118);
Bestimmen, dass sich der Benutzer in einer Vorwärtsrichtung der Fortbewegung des Benutzers (104, 702) nahe einer Randbedingung eines konkreten physischen Segments der physischen Segmente (114, 210) befindet, wobei das konkrete physische Segment dem konkreten virtuellen Pfad (116, 402) entspricht;
als Reaktion auf das Bestimmen, Bestimmen eines Betrags der physischen Rotation durch den Benutzer (104, 702), die für den Benutzer notwendig ist, um sich über einen Punkt in dem konkreten virtuellen Pfad hinaus fortzubewegen, und Bereitstellen einer Benachrichtigung an den Benutzer, die den Betrag der physischen Rotation durch den Benutzer angibt;
während der Detektion der physischen Rotation durch den Benutzer, Aktualisieren einer virtuellen Szene der virtuellen Umgebung durch Rotieren der virtuellen Szene, sodass die Rotation der virtuellen Szene mit der physischen Rotation des Benutzers korreliert; und
Detektieren, dass die physische Rotation des Benutzers (104, 702) abgeschlossen ist, wenn Rotationsdaten (132) angeben, dass der Benutzer um den angegebenen Betrag der physischen Rotation rotiert hat,
und als Reaktion, Aktualisieren der virtuellen Szene durch Rotieren der virtuellen Szene in einer zu der Rotation entgegengesetzten Richtung, die mit der physischen Rotation des Benutzers korreliert, um den konkreten virtuellen Pfad zu zeigen, und Erlauben, dass sich der Benutzer über den Punkt in dem konkreten virtuellen Pfad (116, 402) hinaus fortbewegt.

9. System (106, 600, 708) gemäß Anspruch 8, wobei das Bereitstellen einer Benachrichtigung für den Benutzer, die den Betrag der physischen Rotation durch den Benutzer angibt, ferner das Anzeigen eines grafischen Benutzerschnittstellenelements, GUI-Elements, innerhalb des konkreten virtuellen Pfads umfasst, das angibt, dass die physische Rotation des Benutzers benötigt wird;
wobei bevorzugt das Bereitstellen einer Benachrichtigung für den Benutzer, die den Betrag der physischen Rotation durch den Benutzer angibt, ferner das Bereitstellen einer Audiobenachrichtigung umfasst, die angibt, dass die physische Rotation des Benutzers benötigt wird.

## Revendications

1. Un procédé mis en œuvre par ordinateur (500), comprenant :
la segmentation (510) d'un agencement d'un espace physique (102) entourant un utilisateur (104, 702) en segments physiques (114, 210) ;
la génération (520), sur la base des segments physiques (114, 210), de chemins virtuels (116, 402) pour un environnement virtuel (118) à travers lequel l'utilisateur (104, 702) peut naviguer en parcourant les segments physiques (114, 210) ;
l'affichage (530) d'un chemin virtuel particulier parmi les chemins virtuels (116, 402) sur la base d'un emplacement de l'utilisateur (104, 702) dans l'environnement virtuel (118) ;
la détermination (540) que l'utilisateur, dans une direction de déplacement vers l'avant de l'utilisateur (104, 702), est proche d'une condition de limite d'un segment physique particulier parmi les segments physiques (114, 210), le segment physique particulier correspondant au chemin virtuel (116, 402) particulier ;
en réponse à cette détermination, la détermination d'une quantité de rotation physique de la part de l'utilisateur (104, 702) qui est nécessaire afin que l'utilisateur se déplace au-delà d'un point dans le chemin virtuel (116, 402) particulier, et la fourniture (550) d'une notification à l'utilisateur indiquant la quantité de rotation physique de la part de l'utilisateur ;
pendant la détection de la rotation physique de la part de l'utilisateur, la mise à jour d'une scène virtuelle de l'environnement virtuel par rotation de la scène virtuelle de telle sorte que la rotation de la scène virtuelle soit en corrélation avec la rotation physique de la part l'utilisateur ; et
la détection (560) que la rotation physique de l'utilisateur (104, 702) est achevée lorsque des données de rotation (132) indiquent que l'utilisateur a effectué une rotation de la quantité indiquée de rotation physique, et en réponse, la mise à jour (560) de la scène virtuelle par rotation de la scène virtuelle dans une direction opposée à la rotation qui est en corrélation avec la rotation physique de l'utilisateur pour montrer le chemin virtuel (116, 402) particulier et permettre à l'utilisateur de se déplacer au-delà du point sur le chemin virtuel (116, 402) particulier.

2. Le procédé mis en œuvre par ordinateur de la revendication 1, dans lequel la fourniture d'une notification à l'utilisateur indiquant la quantité de rotation physique de la part de l'utilisateur inclut en outre l'affichage d'un élément d'interface utilisateur graphique, GUI, au sein du chemin virtuel particulier qui indique que la rotation physique de l'utilisateur est nécessaire ;
de préférence, dans lequel la fourniture d'une notification à l'utilisateur indiquant la quantité de rotation physique de la part de l'utilisateur inclut en outre la fourniture d'une notification audio qui indique que la rotation physique de l'utilisateur est nécessaire.

3. Le procédé mis en œuvre par ordinateur de la revendication 1, dans lequel la scène virtuelle est mise en rotation dans la direction opposée à la rotation de la scène virtuelle qui est en corrélation avec la rotation physique de l'utilisateur pendant approximativement 0,3 seconde.

4. Le procédé mis en œuvre par ordinateur de n'importe quelle revendication précédente, dans lequel la détermination que l'utilisateur, dans la direction de déplacement vers l'avant de l'utilisateur (104, 702), est proche de la condition de limite d'un segment physique particulier parmi les segments physiques (114, 210) inclut en outre la détermination que l'utilisateur se trouve dans les limites d'une distance seuil d'une contrainte physique du segment physique particulier.

5. Le procédé mis en œuvre par ordinateur de n'importe quelle revendication précédente, dans lequel la génération des chemins virtuels (116, 402) inclut la génération du chemin virtuel particulier sur la base d'un premier segment physique et d'un deuxième segment physique parmi les segments physiques (114, 210), où les premier et deuxième segments physiques partagent un point commun.

6. Un procédé mis en œuvre par ordinateur, comprenant :
la segmentation d'un agencement d'un espace physique (102) entourant un utilisateur (104, 702) en segments physiques (114, 210) ;
la génération, sur la base des segments physiques, de chemins virtuels (116, 402) pour un environnement virtuel (118) à travers lequel l'utilisateur (104, 702) peut naviguer en parcourant les segments physiques (114, 210) ;
l'affichage d'un chemin virtuel particulier parmi les chemins virtuels (116, 402) sur la base d'un emplacement de l'utilisateur (104, 702) dans l'environnement virtuel (118) ;
la détermination que l'utilisateur, dans une direction de déplacement vers l'avant de l'utilisateur (104, 702), est proche d'une condition de limite d'un segment physique particulier parmi les segments physiques (114, 210), le segment physique particulier correspondant au chemin virtuel (116, 402) particulier ;
en réponse à cette détermination, la détermination d'une quantité de rotation physique de la part de l'utilisateur (104, 702) qui est nécessaire afin que l'utilisateur se déplace au-delà d'un point dans le chemin virtuel particulier, et la fourniture d'une notification à l'utilisateur indiquant la quantité de rotation physique de la part de l'utilisateur ;
pendant la détection de la rotation physique de la part de l'utilisateur, la mise à jour d'une scène virtuelle de l'environnement virtuel par rotation de la scène virtuelle de telle sorte que la rotation de la scène virtuelle soit en corrélation avec la rotation physique de l'utilisateur ; et
la détection que la rotation physique de l'utilisateur (104, 702) est achevée lorsque des données de rotation (132) indiquent que l'utilisateur a effectué une rotation de la quantité indiquée de rotation physique, et en réponse, la mise à jour de la scène virtuelle par rotation de la scène virtuelle dans une direction opposée à la rotation qui est en corrélation avec la rotation physique de l'utilisateur pour montrer un chemin virtuel (116, 402) différent et permettre à l'utilisateur de se déplacer le long du chemin virtuel différent.

7. Le procédé mis en œuvre par ordinateur de la revendication 6, dans lequel le chemin virtuel différent est à l'opposé du chemin virtuel particulier.

8. Un système (106, 600, 708) comprenant un processeur (602) ayant accès à des supports de mémoire stockant des instructions qui, lorsqu'elles sont exécutées par le processeur, amènent le processeur à accomplir les étapes :
segmenter un agencement d'un espace physique (102) entourant un utilisateur (104, 702) en segments physiques (114, 210) ;
générer, sur la base des segments physiques, des chemins virtuels (116, 402) pour un environnement virtuel (118) à travers lequel l'utilisateur (104, 702) peut naviguer en parcourant les segments physiques (114, 210) ;
afficher un chemin virtuel particulier parmi les chemins virtuels (116, 402) sur la base d'un emplacement de l'utilisateur dans l'environnement virtuel (118) ;
déterminer que l'utilisateur, dans une direction de déplacement vers l'avant de l'utilisateur (104, 702), est proche d'une condition de limite d'un segment physique particulier parmi les segments physiques (114, 210), le segment physique particulier correspondant au chemin virtuel (116, 402) particulier ;
en réponse à cette détermination, déterminer une quantité de rotation physique de la part de l'utilisateur (104, 702) qui est nécessaire afin que l'utilisateur se déplace au-delà d'un point dans le chemin virtuel particulier, et fournir une notification à l'utilisateur indiquant la quantité de rotation physique de la part de l'utilisateur ;
pendant la détection de la rotation physique de la part de l'utilisateur, mettre à jour une scène virtuelle de l'environnement virtuel par rotation de la scène virtuelle de telle sorte que la rotation de la scène virtuelle soit en corrélation avec la rotation physique de l'utilisateur ; et
détecter que la rotation physique de l'utilisateur (104, 702) est achevée lorsque des données de rotation (132) indiquent que l'utilisateur a effectué une rotation de la quantité indiquée de rotation physique, et en réponse, mettre à jour la scène virtuelle par rotation de la scène virtuelle dans une direction opposée à la rotation qui est en corrélation avec la rotation physique de l'utilisateur pour montrer le chemin virtuel particulier et permettre à l'utilisateur de se déplacer au-delà du point dans le chemin virtuel (116, 402) particulier.

9. Le système (106, 600, 708) de la revendication 8, dans lequel la fourniture d'une notification à l'utilisateur indiquant la quantité de rotation physique de la part de l'utilisateur inclut en outre l'affichage d'un élément d'interface utilisateur graphique, GUI, au sein du chemin virtuel particulier qui indique que la rotation physique de l'utilisateur est nécessaire ;
de préférence dans lequel la fourniture d'une notification à l'utilisateur indiquant la quantité de rotation physique de la part de l'utilisateur inclut en outre la fourniture d'une notification audio qui indique que la rotation physique de l'utilisateur est nécessaire.
